## Europäisches Patentamt

## European Patent Office

## Office européen des brevets

(19)

(11) Veröffentlichungsnummer : **0 115 285 B1**

(12) **EUROPÄISCHE PATENTSCHRIFT**

(45) Veröffentlichungstag der Patentschrift :
06.05.87

(51) Int. Cl.⁴ : **B 01 D   1/18**

(21) Anmeldenummer : 84100312.2

(22) Anmeldetag : 13.01.84

(54) Zerstäubungstrockner und Verfahren zum Betrieb des Trockners.

(30) Priorität : 21.01.83 DE 3301872

(43) Veröffentlichungstag der Anmeldung :
08.08.84 Patentblatt 84/32

(45) Bekanntmachung des Hinweises auf die Patenterteilung : 06.05.87 Patentblatt 87/19

(84) Benannte Vertragsstaaten :
AT BE CH DE FR GB IT LI NL SE

(56) Entgegenhaltungen :
GB-A-   221 598
GB-A- 2 003 042
US-A- 1 874 665
US-A- 2 957 519
US-A- 3 944 650

(73) Patentinhaber : Henkel Kommanditgesellschaft auf
Aktien
Postfach 1100 Henkelstrasse 67
D-4000 Düsseldorf-Holthausen (DE)

(72) Erfinder : Löffelmann, Rudolf
Erlenweg 44
D-4018 Langenfeld (DE)

**Beschreibung**

Die Erfindung betrifft einen Zerstäubungstrockner mit Trocknungsbehälter mit mindestens einem zum Einleiten des Trocknungsguts in den Behälter dienenden Zerstäubungselement, mit Mitteln zum Einblasen eines erhitzten Gases in den Behälter zum Abtrennen und Abführen von im Trockungsgut enthaltener Flüssigkeit sowie mit einem an einer Fläche gleichverteilten, porösen schlauchförmigen Futterlementen bestehenden Abscheider zum Trennen des entfeuchteten Trocknungsgutes vom Gas innerhalb des Behälters, wobei die Filterelemente im Turmkopf des Trocknungsbehälters direkt oberhalb der Zerstäubungselementes angeordnet sind.

Zerstäubungstrockner weisen in der Regel einen außerhalb des Trocknungsbehälters liegenden Abscheider, insbesondere ein Zyklon, sowie einen damit zusammenwirkenden Ventilator auf. Im Abscheider wird das zerstäubte Trocknungsgut vom verbrauchten Gas getrennt. Der zum Betrieb notwendige Über- oder Unterdruck und die entsprechende Gasströmung werden mit Hilfe des Ventilators reguliert. Bei allen Anlagen dieser Art verläßt der Staub zunächst den Trocknungsbehälter bzw. Turm und muß anschließend getrennt weitergeleitet oder in den Turm zurückgeführt werden.

In den extern angeordneten Abscheidern, insbesondere Zyklonen oder Filtern, verringert sich der Querschnitt der Leitung für die mit Staub beladene Rohluft zwischen Trocknungsbehälter und Abscheider durch anbackenden Staub allmählich, so daß eine entsprechend regelmäßige Reinigung erforderlich ist. Ferner müssen den externen Abscheidern gesonderte Auffangmittel und Austragorgane für den abgeschiedenen Staub, wie Auslauftrichter und Schleusen, zugeordnet werden. Auch hierdurch wird der Aufwand für Reinigung und Instandhaltung erhöht. Hinzu kommt eine Gefährdung des Personals durch die bei Reinigung und Instandhaltung auftretende Staubentwicklung.

Das Rückführen des extern anfallenden Staubs kann alternativ durch Einblasen in die Düsen- bzw. Sprühzone oder nach Mischung mit Wasser durch Zugabe in den Slurry (feuchtes Trocknungsgut) erfolgen. Im ersteren Falle wird in der Düsenzone Staub angereichert. derart, daß dort Temperatur und Feuchtigkeit absinken und demgemäß der Staub schlechter agglomeriert. Das alternative Anfeuchten des Staubes und dessen Zugabe in den Slurry bedingt einen höheren Energieaufwand für die zusätzliche Trocknung. Man könnte daher versuchen, den extern anfallenden Staub dem getrockneten Gut hinzuzufügen. Dort würde jedoch dadurch der Feinanteil im Produkt erhöht und ungleichmäßig verteil (z. B. in Strähnen mit der Folge, daß die zum Bestimmen von Litergewicht sowie Produktfeuchte — also den wesentlichen Qualitätsmerkmalen — herangezogenen Meßverfahren ungenaue bzw. verfälschte Werte lieferten.

Aus GB-A-2 003 042 ist ein gattungsgleicher Zerstäubungstrockner bekannt. Hieraus ist jedoch keine Rückwirkung auf die Filterzone zur Zerstäubungszone entnehmbar. Das Produkt sammelt sich vielmehr am Boden getrennt vom Staub. Der separierte Staub soll deshalb gesondert einer Wiederverwendung zugeführt werden.

Auch bei den bekannten Konstruktionen gemäß US-A-2 957 519 sowie US-A-1 874 665 wird das Produkt in der Trocknungskammer getrennt vom Staub gesammelt. Der Staub findet sich demgemäß in der Abscheidekammer. Deshalb kann die erfindungsgemäß angestrebte Wirkung nicht eintreten.

Auch in der bekannten Konstruktion gemäß GB-A-2 21 598 sammelt sich das getrocknete Produkt am unteren Ende der Trocknungskammer getrennt vom Staub. Der Staub fällt in der Filterkammer an.

Auf einem Transportorgan wird das Produkt in Richtung Filterkammer gefördert, wobei der separierte Staub einfach hinzugefügt wird, ohne dass diese Maßnahme von Einfluß auf die Qualität des Korngrößenspektrums des Produktes im Sinne von dessen Einengung wäre.

Diesen bekannten Konstruktionen ist im übrigen gemeinsam, daß die Trocknungsverfahren im Gleichstrombetrieb arbeiten.

In der DE-OS 17 79 260 wird auch schon ein Zerstäubungstrockner mit innerhalb des Trocknungsbehälters bzw. Turms angeordnetem Abscheider beschrieben. Dieser insbesondere als Zyklon ausgebildete Abscheider wird in der Turmmitte, also der Trocknungszone, angeordnet. Da sich dadurch das als Trocknungskammer zur Verfügung stehende Volumen verkleinert, setzt der Einbau eines Zyklons in die Trockenzone eine entsprechende Vergrößerung des Trocknungsbehälters voraus. Ein in der Turmmitte angeordnetes Zyklon ist im übringen, insbesondere auch für notwendige Reinigungsarbeiten, recht unzugänglich.

In dem aus der vorgenannten DE-OS 17 79 260 bekannten Zerstäubungstrockner wird der Staub zwar innerhalb des Trocknungsbehälters abgetrennt, in dieser Stufe ist aber eine Agglomeration noch nicht möglich. Stattdessen muß der Staub — wenn eine Rückführung erwünscht ist — auch hier extern, z. B. zur Zerstäubungszone. zurückgeführt werden. Die von Zerstäubungstrocknern mit außerhalb des Trocknungsturms liegendem Staubabscheider bekannten Probleme bleiben also bestehen und als ungünstig kommt hinzu, daß der Feinanteil im getrockneten Produkt durch die mechanische Belastung in dem Zyklon erhöht wird.

Der Erfindung liegt die Aufgabe zugrunde. einen Zerstäubungstrockner zu schaffen, in dem der Feinanteil bzw. Staub des getrockneten Gutes innerhalb des Trocknungsbehälters vom Trocknungsgas sowohl zu trennen als auch im Sinne des Bildens von Produktpartikeln einer relativ engen Größenabweichung unmittelbar innerhalb des Trocknungsbehälters — d. h. ohne den Umweg über externe Leitungen — zu agglomerieren ist, wobei die Betriebskosten für Reinigung, Instandhaltung und Energieaufwand gegenüber dem Fall eines außerhalb des Trocknungsbehälters angeordneten Abscheiders reduziert werden sollen.

Die erfindungsgemäße Lösung besteht für den eingangs beschriebenen Zerstäubungstrockner mit innerhalb des Trocknungsbehälters angeordnetem Abscheider in der Ausgestaltung gemäß Hauptanspruch. Zweckmäßige Weiterbildungen sind Gegenstände der Unteransprüche. Erfindungsgemäß werden in dem Zerstäubungstrockner die zerstäubten Teilchen des Trocknungsgutes mit dem Trocknungsgasstrom zu den, insbesondere als von außen nach innen durchströmte Schläuche ausgebildeten, Filterelementen transportiert sowie dort abgelagert und teilweise agglomeriert ; ferner werden die, insbesondere aus Nadelfilz bestehenden, Filterelemente zwecks Ablösens des abgelagerten Trocknungsgutes gruppenweise und/oder periodisch mit Preßluftstößen beaufschlagt, derart, daß sich die abgelagerten bzw. agglomerierten Teilchen von den Filterelementen lösen und — bei Gegenstrombetrieb — aufgrund der Schwerkraft erneut durch die Trocknungs — und Zerstäubungszonen fallen, wo es zu einer weiteren Agglomeration mit noch feuchten Partikeln kommt. Anstelle der zum Betrieb des Trockners in der Regel vorgesehenen Trocknungs- und/oder Druckluft können bei Bedarf auch andere Gase eingesetzt werden, die — je nach Aufgabe — gegenüber dem Trocknungsgut inert oder in bestimmter Weise chemisch wirksam sind.

Durch die Anordnung von Filterelementen als Abscheider innerhalb des Trocknungsbehälters wird eine Agglomeration mit den Pulverpartikeln im Trockner und eine Gleichverteilung des verbleibenden Feinanteils im getrockneten Gut erreicht. Daher können die wesentlichen qualitativen Führungsgrößen der Zerstäubungstrockner, nämlich das Litergewicht und die Restfeuchte des getrockneten Produktes, über die Regelung des gesamten Prozesses in engen Toleranzgrenzen gehalten werden. Da die von den Filterelementen abfallenden agglomerierten Staubteilchen bei Gegenstrombetrieb in einem bestimmten Größenbereich relativ schnell dem Gasstrom entgegen zum Behälterausgang fallen, ergibt sich zusätzlich eine Verengung des erhaltenen Kornspektrums um eine mittlere Größe. Während sich also die Qualität des getrockneten Gutes bei herkömmlichen Zerstäubungstrocknern durch den zugegebenen Staub vermindert, wird der Staub erfindungsgemäß innerhalb des Zerstäubungstrockners zum Wachsen bzw. zu gegenseitiger Agglomeration bereits vorhandener Partikel und damit zur Qualitätsverbesserung herangezogen.

Im Gegensatz zu früheren Anlagen entfallen beim erfindungsgemäßen Zerstäubungstrockner separate Staubabscheider, eine Abluftleitung zwischen Trocknungsbehälter und Staubabscheider, zum Austragen des Staubes dienende Schleusen am Abscheider sowie Transportorgane zum Weiterfördern des Staubs. Die Betriebskosten werden erfindungsgemäß entsprechend vermindert. Das gilt zunächst für die Reinigung des Abscheiders, der Schleusen und der Transportorgane für den Staub, alsdann für die Instandhaltung des Abscheiders mit Isolierung und Traggerüst, der Schleusen und der Transportorgane und schließlich für den Energiebedarf. Letzterer wird durch geringere Luftwiderstände (entfallende Abluftleitung), Wegfall eines Antriebs für Schleusen und Förderorgane sowie die Integration des im Vergleich zum Fall bei herkömmlichen Zerstäubungstrocknern wesentlich herabgesetzt.

Die erfindungsgemäß verbesserte Wirkungsweise ergibt sich vor allem daraus, daß als Anströmfläche der mit Staub beladenen Luft mindestens der gesamte Strömungsquerschnitt, insbesondere der Turmquerschnitt, des Trocknungsbehälters zur Verfügung steht. Es ist also keine Einschnürung in Form einer Abluftleitung oder dergleichen vorhanden, welche bei konventioneller Bauart zu erhöhter Staubförderung in den Abscheider führte. Durch die erfindungsgemäße Gleichverteilung der Filterelemente wird ein gleichmäßiges Strömungsprofil über den gesamten Querschnitt des Turms bzw. Trocknungsbehälters erzielt.

Unter Umständen kann indessen das Strömungsprofil bei ausgeprägtem Geschwindigkeitsmaximum in der Turmachse dadurch noch gleichmäßiger gemacht werden, wenn in der Mitte der Kopfplatte weniger Filterelemente vorhanden sind. In diesem Falle würde in der Turmmitte weniger Luft abgesaugt.

Ein ähnlicher Effekt wird auch erzielt, wenn die Filterschläuche im äußeren Bereich länger als im Zentrum sind. Der Strömungsquerschnitt kann vergrößert oder verkleinert sein. Er kann ferner, wie oben dargelegt, auch nur teilweise mit Filterelementen bestückt werden.

Anhand der schematischen Darstellung eines Ausführungsbeispiels werden Einzelheiten der Erfindung erläutert. Es zeigen :

Figur 1  den prinzipiellen Gesamtaufbau eines Zerstäubungstrockners im Schnitt ; und

Figur 2  den Kopfbereich des Turms des Zerstäubungstrockners nach Fig. 1 in vergrößerter Darstellung im Schnitt.

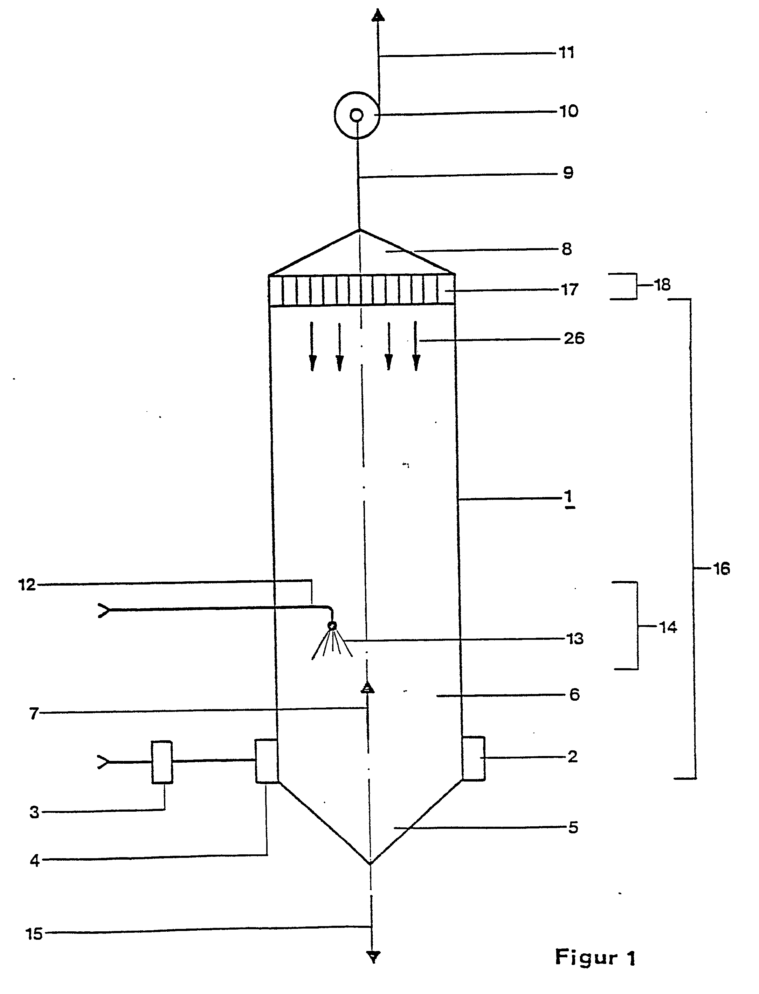

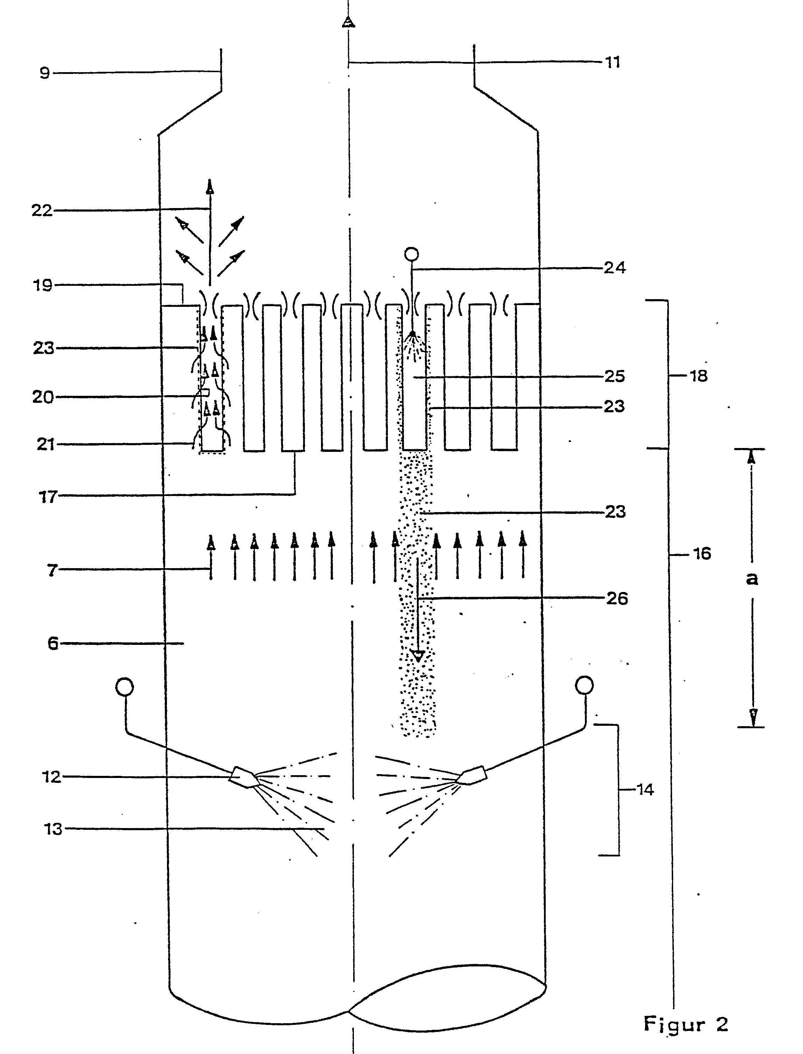

Der insgesamt mit 1 bezeichnete Zerstäubungstrockner nach Fig. 1 und 2 wird über eine Ringleitung 2 mit in einem Erhitzer 3 erwärmtem Trocknungsgas 4 vom Sammeltrichter 5 am unteren Ende des Turms bzw. Trocknungsbehälters 6 her beaufschlagt. Das z. B. aus Luft, Rauchgas oder Dampf bestehende Trocknungsgas 4 wird im Ausführungsbeispiel von unten nach oben in Pfeilrichtung durch den als Turm ausgebildeten Trocknungsbehälter 6 gefördert und am Turmkopf 8 über eine Abluftleitung 9 mit Ventilator 10 in Pfeilrichtung 11 abgezogen. Zugleich wird über Zerstäuber 12 feuchtes Trocknungsgut (Slurry) 13 in die Zerstäubungszone 14 des Trocknungsbehälters 6 eingebracht. Das feuchte Trocknungsgut 13 kann mechanisch, z. B. über Druckdüsen, pneumatisch, z. B. über Mehrstoffdüsen, durch Zentrifugalkraft, z. B. über rotierende Scheiben oder Düsen, oder durch noch andere Verfahren, z. B. durch Ultraschall, zerstäubt werden. Durch das Feinverteilen des Trocknungsguts 13 in dem aus dem Bereich zwischen dem Sammeltrichter 5 am unteren Ende des Trocknungsbehälters 6 und der Sprühzone 14 aus geförderten Trocknungsgas 4 entsteht ein heterogenes Gassystem, welches durch die Schwerkraft der groben, in den Sammeltrichter 5 fallenden und als Trockengut in der Pfeilrichtung 15 nach außen gelangenden Partikel bereits innerhalb der Trocknungszone 16 teilweise getrennt wird. Die feinen und leichten Partikel werden gleichzeitig als Staub mit der Trocknungsluft in Pfeilrichtung 7 zum Turmkopf 8 weitergeleitet.

Erfindungsgemäß erfolgt das Trennen dieses Staubes von der zur Abluftleitung 9 weitergeführten Trocknungsluft nicht in einer separaten Vorrichtung sondern bereits innerhalb des Trocknungsbehälters 6 in dort angeordneten porösen Filterelementen 17, die sich über den gesamten Strömungsquerschnitt des Turms erstrecken.

Das gemäß Fig. 2 im Turm von unten nach oben axial oder mit einer tangentialen Komponente strömende Trocknungsgas 4 wird in der Zerstäubungszone 14 mit feuchtem Trocknungsgut 13 beladen. Dieses ist in der Trocknungszone 16 im gewünschten Maße von der in ihm enthaltenen Feuchtigkeit zu befreien. Dabei fallen größere getrocknete Partikel zurück nach unten während feinere, pulverförmige Partikel mit dem durch Pfeile 7 angedeuteten Gasstrom zu den in der an den Turmkopf 8 angrenzenden Filterzone 18 angeordneten Filterelementen 17 transportiert werden.

Die Filterelemente 17 bestehen im Ausführungsbeispiel aus an einem Lochboden 19 aufgehängten Filterschläuchen 20. In der in Pfeilrichtung 7 von unten nach oben im Trocknungsbehälter 6 strömenden Trocknungsluft werden die Filterschläuche 20 längs der kleinen Pfeile 21 von außen nach innen so beaufschlagt, daß sich feine bzw. leichte mit der Luft mitgeführte Teilchen auf der Außenfläche der Filterschläuche 20 ablagern und gereinigte Luft 22 auf der Oberseite des Lochbodens 19 austritt. Auf den Schlauchaußenflächen kommt es zu einer Primäragglomeration 23. Vorzugsweise werden Filterschläuche 20 aus Nadelfilz verwendet, es können beliebige Fabrikate eingesetzt werden. Die Schläuche 20 und ihre Stützkörper sollen so fest eingespannt werden, daß sie sich auch nicht durch die Wirkung der aus der Luftturbulenz resultierenden Kräfte berühren können.

Die Reinigung der Schläuche 20 erfolgt zweckmäßig gruppenweise und/oder periodisch durch einen auf die Innenseite des jeweiligen Schlauchs gerichteten Preßluftstoß 24. Ein in einer solchen Reinigungsphase befindlicher Filterschlauch wird in Fig. 2 mit 25 bezeichnet. Beim Reinigen löst sich der abgelagerte Filterstaub 23 und fällt aufgrund der Schwerkraft in Pfeilrichtung 26 zurück in die Zerstäubungszone 14. Dort kommt es zu einer weiteren Agglomeration mit den aus den Zerstäubern 12 eingebrachten, noch feuchten Produktpartikeln 13. Durch periodische und gruppenweise Reinigung der Schläuche 20 läßt sich eine quasikontinuierliche Staubrückführung vom aus den filterelementen 17 bestehenden Abscheider zur Zerstäubungszone 14 erreichen. Eine Schlauchgruppe kann dabei aus 10 bis 20 Schläuchen bestehen. In einem Ausführungsbeispiel war ein den Strömungsquerschnitt des Turms ganz ausfüllender Lochboden 19 mit 1130 Schläuchen bestückt.

Ein Merkmal der Erfindung ist der im wesentlichen der Länge der Trocknungszone 16 entsprechende Abstand a zwischen der Filterzone 18 und der Zerstäubungszone 14. In Versuchen wurde ermittelt, daß dieser Abstand von 2,5 m nicht unterschreiten soll. Ein Abstand von mindestens 7 m führt noch zu einer ausreichenden Agglomeration. Die Länge der Filterschläuche 20 — also die Dicke der Filterzone 18 - in vertikaler Richtung betrug in einem Ausführungsbeispiel 2,7 m.

Bezugszeichenliste

1 = Zerstäubungstrockner
2 = Ringleitung
3 = Erhitzer
4 = Trocknungsgas
5 = Sammeltrichter
6 = Trocknungsbehälter
7 = Pfeilrichtung
8 = Turmkopf
9 = Abluftleitung
10 = Ventilator
11 = Pfeilrichtung
12 = Zerstäuber
13 = Trocknungsgut
14 = Zerstäubungszone
15 = Pfeilrichtung
16 = Trocknungszone
17 = Filterelement
18 = Filterzone
19 = Lochboden
20 = Filterschlauch
21 = kleine Pfeile
22 = gereinigte Luft
23 = Primäragglomeration
24 = Preßluftstoß
25 = gereinigter Schlauch
26 = Pfeilrichtung
a = Abstand

Patentansprüche

1. Zerstäubungstrockner (1) mit Trocknungsbehälter (6) mit mindestens einem zum Einleiten des Trocknungsguts (13) in den Behälter (6) dienenden Zerstäubungselement (12), mit Mitteln (2) zum Einblasen eines erhitzten Gases (4) in den Behälter (6) zum Abtrennen und Abführen von im Trockungsgut (13) enthaltener Flüssigkeit sowie mit einem aus an einer Fläche gleichverteilten, porösen schlauchförmigen Filterelementen bestehenden Abscheider (17) zum Trennen des entfeuchteten Trocknungsgutes vom Gas innerhalb des Behälters (6), dadurch gekennzeichnet, daß das Zerstäubungselement (12) und die Mittel (2) zum Einblasen des Gases für Gegenstrombetrieb angeordnet sind, die Filterelemente im Turmkopf des Trockungsbehälters direkt oberhalb des Zerstäubungselementes angeordnet sind und der Abstand zwischen dem Zerstäubungselement und den den letzteren zugewandten Enden der Filterelemente mindestens 2,5 m beträgt.

2. Zerstäubungstrockner (1) nach Anspruch 1, dadurch gekennzeichnet, daß der Abstand (9) zwischen den Zerstäubungselementen (12) und den den letzteren zugewandten Enden der Filterelemente (17) 2,5 bis 5 m beträgt.

3. Zerstäubungstrockner (1) nach Anspruch 1 oder 2, dadurch gekennzeichnet, daß den Filterelementen (17) Mittel zum Beaufschlagen der Schlauchinnenseiten mit Druckgasstößen zugeordnet sind.

4. Zerstäubungstrockner nach den Anspruchen 1, 2 oder 3, dadurch gekennzeichnet, daß die Filterelemente (17) aus Nadelfilz ausgebildet sind.

5. Zerstäubungstrockner nach Anspruch 4, dadurch gekennzeichnet, daß die Filterschläuche (20) an einem Lochboden (19), insbesondere stabilisiert durch im Lochboden eingespannte Stützkörper, aufgehängt sind.

6. Verfahren zum Betrieb des Zerstäubungstrockners (1) nach Anspruch 3, dadurch gekennzeichnet, daß die zerstäubten Teilchen des Trocknungsguts (13) mit dem Gasstrom (7) zu den Filterelementen (17) transportiert sowie dort abgelagert und agglomeriert werden und daß die Filterelemente (17) zwecks quasi kontinuierlichen Ablösens des agglomerierten Trocknungsgutes (23) gruppenweise, insbesondere periodisch, mit Druckgasstößen (24) beaufschlagt werden.

## Claims

1. Atomising dryer (1) with drying container (6) with at least one atomising element (12) serving for the introduction of the goods (13) to be dried into the container (6), with means (2) for blowing a heated gas (4) into the container (6) for separating and removing liquid contained in the goods (13) to be dried as well as with a separator (17), which is uniformly distributed at a surface and consists of porous hose-shaped filter elements, for the separation of the dehydrated goods to be dried from the gas within the container (6), characterised thereby, that the atomising element (12) and the means (2) for the blowing- in of the gas are arranged for counterflow operation, the filter elements are arranged directly above the atomising element in the tower head of the drying container and the spacing between the atomising element and the filter element ends facing the latter amounts to at least 2.5 metres.

2. Atomising dryer (1) according to claim 1, characterised thereby, that the spacing (9) between the atomising elements (12) and those ends of the filter elements (17), which face the latter, amounts to 2.5 to 5 metres.

3. Atomising dryer (1) according to claim 1 or 2, characterised thereby, that means for loading the insides of the hoses by impulses of compressed gas are associated with the filter elements (17).

4. Atomising dryer according to the claims 1, 2 or 3, characterised thereby, that the filter elements (17) are constructed of needle felt.

5. Atomising dryer according to claim 4, characterised thereby, that the filter hoses (20) are suspended at a perforate plate (19) in particular stabilised by supporting bodies clamped in the perforate plate.

6. Method for the operation of the atomising dryer (1) according to claim 3, characterised thereby, that the atomised particles of the goods (13) to be dried are transported by the gas flow (7) to the filter elements (17) as well as deposited and agglomerated there and that the filter elements (17) are loaded groupwise, in particular periodically, by impulses of compressed gas (24) for the purpose of quasi-continuous detaching of the agglomerated goods (23) to be dried.

## Revendications

1. Séchoir à atomisation (1) comportant un récipient de séchage (6) pourvu d'au moins un élément d'atomisation (12) servant à l'introduction de la matière à sécher (13) dans ce récipient (6), des moyens (2) adaptés pour injecter un gaz chauffé (4) dans ce dernier (6) afin d'effectuer la séparation et l'évacuation du liquide contenu dans la matière à sécher (13) et d'au moins un séparateur (17) constitué d'éléments poreux de filtration en forme de tuyaux répartis uniformément sur une surface pour séparer la matière à sécher déshumidifiée du gaz à l'intérieur du récipient (6), séchoir caractérisé par le fait que l'élément d'atomisation (12) et les moyens (2) adaptés pour injecter du gaz chauffé sont disposés pour un écoulement à contre-courant, que les éléments poreux de filtration dans la tête de tour du récipient de séchage (6), sont disposés directement au-dessus de l'élément d'atomisation (12) et que la distance entre cet élément d'atomisation et les extrémités inférieures des éléments de filtration qui sont tournées vers ce dernier est d'au moins 2,5 m.

2. Séchoir à atomisation (1) selon la revendication 1, caractérisé par le fait que la distance entre les éléments d'atomisation (12) et les extrémités inférieures des éléments poreux de filtration (17) qui sont tournées vers ces derniers est de 2,5 m à 5 m.

3. Séchoir à atomisation (1) selon l'une ou l'autre des revendications 1 ou 2, caractérisé par le fait qu'aux éléments poreux de filtration (17) sont adjoints des moyens adaptés pour appliquer aux côtés intérieurs des formes de tuyaux de ceux-ci des impulsions de gaz comprimé.

4. Séchoir à atomisation (1) selon l'une quelconque des revendications 1 à 3, caractérisé par le fait que les éléments poreux de filtration (17) sont constitués en feutre aiguilleté.

5. Séchoir à atomisation (1) selon la revendication 4, caractérisé par le fait que les formes de tuyaux (20) des éléments de filtration sont suspendues à un fond perforé (19) et, en particulier, stabilisées par des corps de soutien enserrés dans ce fond perforé.

6. Procédé de fonctionnement du séchoir à atomisation (1) selon la revendication 3, caractérisé par le fait que l'on transporte les particules atomisées de la matière à sécher (13), au moyen du courant de gaz (7), jusqu'aux éléments poreux de filtration (17) et que, là, elles se déposent et s'agglomèrent et que, sur ces éléments poreux de filtration (17), on applique, par groupe, en particulier périodiquement, des impulsions de gaz comprimé (24) afin de détacher de façon quasi continue la matière à sécher agglomérée (23).

Figur 1

Figur 2